# EUROPEAN PATENT SPECIFICATION

(11) **EP 0 955 646 B1**
(45) Date of publication and mention of the grant of the patent: **08.10.2003**
(21) Application number: 99201338.3
(22) Date of filing: 29.04.1999
(51) Int. Cl.: H01F 41/12, H01F 41/04, H01F 27/29, B29C 45/14

(54) **Inductive element**
Induktives Bauelement
Composant inductif

(30) Priority: 08.05.1998 EP 98201463
(43) Date of publication of application: 10.11.1999
(73) Proprietor: Koninklijke Philips Electronics N.V., 5621 BA Eindhoven (NL)
(72) Inventor: De Graaf, Martinus Johannes Maria, 5656 AA Eindhoven (NL); Visser, Eelco Gerben, 5656 AA Eindhoven (NL)
(74) Representative: van der Veer, Johannis Leendert

(56) References cited:
- SASADA I ET AL: "PLANAR INDUCTORS USING ZIZN THIN PLATES AND THE APPLICATION TO HIGH-FREQUENCY DC-DC CONVERTERS" IEEE TRANSACTIONS ON MAGNETICS,US,IEEE INC. NEW YORK, vol. 29, no. 6, 1 November 1993 (1993-11-01), pages 3231-3233, XP000432436 ISSN: 0018-9464
- PATENT ABSTRACTS OF JAPAN vol. 011, no. 393 (M-654), 23 December 1987 (1987-12-23) & JP 62 161455 A (YAMAHA MOTOR CO LTD), 17 July 1987 (1987-07-17)
- PATENT ABSTRACTS OF JAPAN vol. 008, no. 074 (E-236), 6 April 1984 (1984-04-06) & JP 58 223306 A (TOUKOU KK), 24 December 1983 (1983-12-24)

## Description

The invention relates to a method of manufacturing an inductive element for applications on printed circuit boards, which method includes the following steps:
a) providing a number of predominantly parallel electroconductive wires in the mould of an injection-moulding device,
b) circumferentially providing a part of the wires with a synthetic resin by injection moulding, in such a manner that the ends of the wires remain free,
c) providing an envelope of a soft-magnetic material around the circumferentially injection moulded part of the wires.

The invention also relates to an inductive element. The term inductive elements includes inter alia inductors, such as in particular power inductors, and inductance coils, as well as transformers, such as in particular power transformers.

The method as described in the opening paragraph as well as the inductive element produced with this method are known per se.

It has been found that in practice the inductive elements manufactured in accordance with the above-mentioned method give rise to problems. For example, in the case of mass-produced inductive elements, the electrical and magnetic properties of the elements vary to an undesirable extent. It has been found that the magnetic fields, which are generated during operation of these elements, are not optimally homogeneous. It has also been found that sometimes an electric short-circuit occurs in these elements. These drawbacks increase as the thickness or diameter of the wires is chosen to be smaller.

It is an object of the invention to obviate the above-mentioned drawbacks. The invention more particularly aims at providing a method which enables inductive elements having improved electrical and magnetic properties to be manufactured. The invention also aims at providing an improved inductive element.

These and other objects of the invention are achieved by a method of the type mentioned in the opening paragraph, which is characterized in that the parts of the wires to be circumferentially injection moulded are secured by means for securing the wires in the mould during said injection moulding operation.

The invention is based on the experimentally gained insight that deformation of the wires during the injection-moulding process is responsible for said drawbacks. This deformation is caused by the force with which the synthetic resin is squirted into the mould. Said undesirable deformation is substantially reduced, and sometimes even precluded, by securing the wires in the mould during the injection-moulding process.

It is noted that, in principle, it is also possible to connect the wires to each other, for example by means of a piece of adhesive tape. However, this possibility requires an additional process step, namely the provision of the adhesive tape. In addition, it has been found that this solution is less satisfactory when synthetic resins are used which are squirted into the mould at a high temperature.

A further preferred embodiment is characterized in that the means comprise at least one pair of elongated parts, which are provided in the mould and between which the wires are clamped. These parts may, for example, be embodied so as to be in the form of knives which, when the mould portions are closed, rest on the wires in a clamping manner. If one pair of this type of knives is used, the knives are preferably arranged in the mould in such a manner that approximately the center of the part of the wires to be circumferentially injection moulded is engaged in a clamping manner.

A more refined modification of the last-mentioned embodiment of the method is characterized in accordance with the invention in that the means comprise at least two pairs of elongated parts, which are provided with teeth between which the wires are held, which teeth are distributed over said parts in such a manner that adjoining wires are not held by the same pair of parts. As a result of this measure, the creepage distance between adjoining wires is larger than in the last-mentioned embodiment. Consequently, the risk of problems caused by a short-circuit due to moisture is reduced.

Another interesting embodiment of the method is characterized in that the wires form part of a lead frame whose transport strips are removed. The use of lead frames simplifies the positioning of the wires in the mould of the injection-moulding device. Preferably, the wires are also connected to the adjoining wire or wires at the location where the parts ofthe injection-moulding device rest on the wires during the injection-moulding process. This precludes injection-moulding material from being squeezed out. These connections (also referred to as "dam bars") must be interrupted after the synthetic resin has been provided.

Another favorable embodiment of the method in accordance with the invention is characterized in that a thermoplastic synthetic resin is circumferentially provided on the wires by injection moulding. It is noted that, in principle, a thermo-curing synthetic resin may alternatively be used. However, due to the necessary, relatively long curing times of customary thermo-curing synthetic resins, they are less attractive for use in mass-production. Preferably, use is made of a thermoplastic synthetic resin based on liquid-crystalline polymers. Said polymers can be readily injection moulded and have relatively good flame-extinguishing properties.

The invention also relates to an inductive element which comprises a number of predominantly parallel electroconductive wires which are partly circumferentially provided with a synthetic resin by injection moulding, the injection moulded part of the wires being accommodated in a block-shaped, undivided core of a soft-magnetic material. Preferably, a thermoplastic synthetic resin is used. The inductive element according to the present invention is defined in claim 4. If an undivided core (i.e. without connection surfaces) is used, then the homogeneity of the magnetic field generated during operation of the inductive element is optimal. Preferably, the core is predominantly composed of a soft-magnetic ferrite material. Very suitable ferrite materials include MnZn and NiZn ferrite materials.

These and other aspects of the invention will be apparent from and elucidated with reference to the embodiments described hereinafter.

### In the drawings:

Fig. 1 is an elevational view of an inductive element in accordance with the invention,
Fig. 2 is a schematic, longitudinal sectional view of the inductive element shown in Fig. 1, and
Fig. 3 shows a number of intermediate products obtained by means of the method in accordance with the invention.

It is noted that, for clarity, the Figures are not drawn to scale. Like reference numerals in different Figures refer to like elements in these Figures.

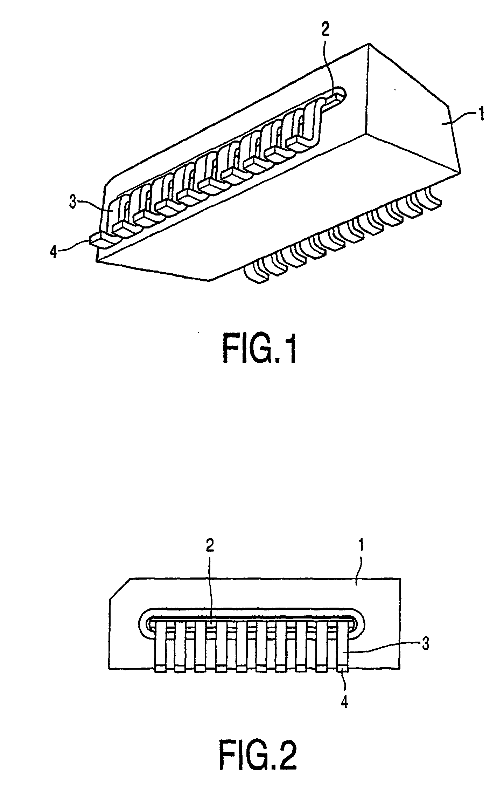

Fig. 1 shows an elevational view of an inductive element in the form of an inductor. This inductive element comprises a block-shaped, undivided core (1) of a soft-magnetic ferrite material, which in this case consists of MnZn-ferrite. Said core 1 comprises a through-hole (2) through which ten wires (3) of tin-plated copper are passed. These wires are bent at their end portions (4) in such a manner that the inductive element can be soldered as an SMD-component onto a printed circuit board (PCB). By means of an injection-moulding process, the wires are partly circumferentially covered with an electrically insulating synthetic resin, which in this case consists of a thermoplastic synthetic resin on the basis of liquid-crystalline polymers.

Fig. 2 is a schematic, longitudinal sectional view of the inductive element shown in Fig. 1.

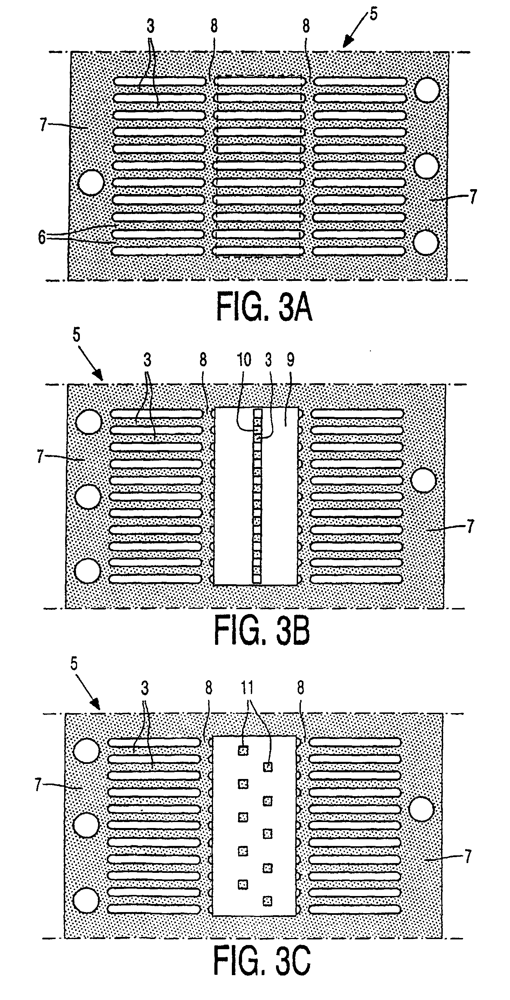

The method in accordance with the invention is explained in greater detail by means of Figs. 3-A, 3-B and 3-C. Fig. 3-A shows a part of a lead frame (5) of tin-plated copper, which comprises ten substantially parallel wires (3) which are provided in the lead frame. The wires are connected at their ends (6) to the transport strips (7) of the lead frame (5). In accordance with the embodiment shown, the wires (3) are also connected, at locations (8), to adjacent wires, the so-called "dam bars". A lead frame comprises a large number of these wire structures as shown in Fig. 3-A.

The substantially parallel wires (3) are subsequently introduced into the mould of an injection-moulding device (not shown). The part of the wires to be circumferentially injection moulded is bounded by said "dam bars" (8). By virtue of the presence of these dam bars, the injection-moulding material is not extruded between the wires.

The mould of the injection-moulding device comprises means for securing the wires during the injection-moulding process. These means, in their simplest form, consist of two knives connected to the mould, between which the wires are clamped substantially in the middle. Fig. 3-B is a plan view of the lead frame after a part of the wires has been circumferentially injection moulded in accordance with the method of the invention. In this method, a layer (9) of a synthetic resin is provided which extends as far as the "dam bars" (8). Due to the presence of the knives, a channel (10) is formed in the layer (9), in which the. wires (3) can be readily recognized.

Subsequently, the "dam bars" (8) and the transport strips are removed from the lead frame. After the provision of a small amount of adhesive on one or both main surfaces of the circumferentially injection moulded synthetic resin material, an undivided, block-shaped envelope of a soft-magnetic ferrite material (MnZn-ferrite) is slid over the circumferentially injection moulded wires. Finally, the free ends of the wires are bent in such a manner that a so-called gulf-wing is formed, which renders the resultant inductive element suitable for use as an SMD-element.

In Fig. 3-C, an improved embodiment of the method in accordance with the invention is shown. The mould used for circumferentially injection moulding the wires comprises; in this case, two pairs of elongated parts for securing the wires. These parts are provided with teeth, which are distributed over the parts in such a manner that adjacent wires are not held by the same pair of parts. Due to the presence of these teeth, openings (11) are formed in the layer (9) in which the wires (3) can be recognized. This method causes the creepage distance between adjoining wires to become longer. As a result, the risk of short-circuit problems during operation of the inductive element in moist conditions is small. The resultant circumferentially injection moulded structure is converted to an inductive element in the same manner as described hereinabove.

It has been found that inductive elements of the type manufactured in accordance with the inventive method generate, in operation, optimally homogeneous magnetic fields. Also the risk of electric short-circuits proves to be small.

## Claims

1. A method of manufacturing an inductive element for applications on printed circuit boards, which method includes the following steps:
a) providing a number of predominantly parallel electroconductive wires (3) in the mould of an injection-moulding device,
b) circumferentially providing a part of the wires (3) with a synthetic resin (9) by injection moulding, in such a manner that the ends of the wires (3) remain free,
c) providing an envelope of a soft-magnetic material (1) around the circumferentially injection moulded part of the wires (3), and
d) reshaping the ends of the wires (3)
**characterized in that** the parts of the wires (3) to be circumferentially injection moulded are secured by means for securing the wires in the mould during said injection moulding operation.

2. A method as claimed in claim 1 in which the wires (3) form part of a lead frame (5) having transport strips (7), **characterized in that** the method further comprises the step of removing the transport strips (7) from the lead frame (5).

3. A method as claimed in claim 1, **characterized in that** the synthetic resin (9) is a thermoplastic synthetic resin.

4. An inductive element comprising a number of predominantly parallel electroconductive wires (3) which comprise a partly circumferentially provided injection-moulded coating of a synthetic resin (9), the injection-moulded part of the wires (3) being accommodated in a block-shaped, undivided core (1) of a soft-magnetic material, **characterized in that** the coating of synthetic resin (9) is provided with a channel (10) or with openings (11) in which part of the wires (3) can be recognised.

5. An inductive element as claimed in claim 4, **characterized in that** the core (1) is predominantly composed of a soft-magnetic ferrite material.

6. An injection-moulding device for manufacturing an inductive element according to claim 4, **characterized in that** the injection-moulding device is provided with means for securing the wires (3) in the mould.

7. An injection-moulding device as claimed in claim 6, **characterized in that** the means comprise at least one pair of elongated parts, which are provided in the mould and between which the wires (3) are clamped.

8. An injection-moulding device as claimed in claim 6, **characterized in that** the means comprise at least two pairs of elongated parts, which are provided with teeth between which the wires are held, which teeth are distributed over said parts in such a manner that adjoining wires (3) are not held by the same pair of parts.

## Patentansprüche

1. Verfahren zum Herstellen eines induktiven Elementes für Applikationen auf Printplatten, wobei dieses Verfahren die nachfolgenden Verfahrensschritte umfasst:
a) das Anringen einer Anzahl vorwiegend paralleler elektrisch leitender Drähte (3) in der Form einer Spritzgusseinrichtung,
b) das im Spritzgussverfahren Anbringen eines Kunstharzes (9) am Umfang eines Teils der Drähte (3), und zwar derart, dass die Enden der Drähte (3) frei bleiben,
c) das Anbringen einer Hülle aus einem weichmagnetischen Material (1) um den am Umfang im Spritzgussverfahren vorgesehenen Teil der Drähte (3), und
d) das Neu Formen der Enden der Drähte (3),
**dadurch gekennzeichnet, dass** die Teile der Drähte (3), die am Umfang im Spritzgussverfahren mit einer Schicht versehen werden sollen, während der Durchführung des Spritzgussverfahrens in der Form mit Hilfe von Mitteln zum Sichern der Drähte gesichert werden.

2. Verfahren nach Anspruch 1, wobei die Drähte (3) einen Teil eines Teilungsrahmens (5) bilden, der Transportstreifen (7) aufweist, **dadurch gekennzeichnet, dass** das Verfahren weiterhin den Verfahrensschritt umfasst, bei dem die Transportstreifen (7) von dem Rahmen (5) entfernt werden.

3. Verfahren nach Anspruch 1, **dadurch gekennzeichnet, dass** der Kunstharz (9) ein thermoplastischer Kunstharz ist.

4. Induktives Element mit einer Anzahl vorwiegend paralleler elektrisch leitender Drähte (3), die eine teilweise am Umfang vorgesehene im Spritzgussverfahren angebrachte Deckschicht aus einem Kunstharz (9) aufweisen, wobei der im Spritzgussverfahren bedeckte Teil der Drähte (3) in einem blockformigen, ungeteilten Kern (1) aus weichmagnetischem Material untergebracht ist, **dadurch gekennzeichnet, dass** die Bedeckung aus Kunstharz (9) mit einem Kanal (10) oder mit Öffnungen (11) versehen wird, in dem bzw. denen ein Teil der Drähte (3) erkannt werden kann.

5. Induktives Element nach Anspruch 4, **dadurch gekennzeichnet, dass** der Kem (1) vorwiegend aus einem weichmagnetischen Ferritmaterial besteht.

6. Spritzgusseinrichtung zum herstellen eines induktiven Elementes nach Anspruch 4, **dadurch gekennzeichnet, dass** die Spritzgusseinrichtung mit Mitteln versehen ist zum Befestigen der Drähte (3) in der Gussform.

7. Spritzgusseinrichtung nach Anspruch 6, **dadurch gekennzeichnet, dass** die Mittel wenigstens ein Paar länglicher Teile aufweisen, die in der Form vorgesehen werden und zwischen denen die Drähte (3) geklemmt werden.

8. Spritzgusseinrichtung nach Anspruch 6, **dadurch gekennzeichnet, dass** die Mittel wenigstens zwei Paare länglicher Teile aufweisen, die mit Zähnen versehen sind, zwischen denen die Drähte festgehalten werden, wobei diese Zähne über die genannten Teile derart verteilt sind, dass nebeneinander liegende Drähte (3) von demselben Zähnepaar festgehalten werden.

## Revendications

1. Procédé pour fabriquer un élément inductif pour des applications sur des cartes de circuits imprimés, lequel procédé comprend les étapes suivantes consistant à:
a) appliquer un certain nombre de fils électroconducteurs (3) d'une manière prédominante parallèles dans le moule d'un dispositif de moulage par injection,
b) pourvoir circonférentiellement, par moulage par injection, une partie des fils (3) d'une résine synthétique de telle façon que les extrémités des fils (3) restent libres,
c) appliquer une enveloppe constituée d'un matériau magnétique doux (1) autour de la partie des fils (3) qui est moulée circonférentiellement, et
d) refaçonner les extrémités des fils (3),
**caractérisé en ce que** les parties des fils (3) qui doivent être moulées circonférentiellement par injection sont fixées par des moyens pour fixer les fils dans le moule pendant ladite opération de moulage par injection.

2. Procédé selon la revendication 1 dans lequel les fils (3) font partie d'une grille de connexion (5) ayant des bandes de transport (7), **caractérisé en ce que** le procédé comprend encore l'étape d'enlèvement des bandes de transport (7) à partir de la grille de connexion (5).

3. Procédé selon la revendication 1, **caractérisé en ce que** la résine synthétique (9) est une résine synthétique thermoplastique.

4. Elément inductif comprenant un certain nombre de fils électroconducteurs (3) d'une manière prédominante parallèles qui sont partiellement pourvus circonférentiellement d'un revêtement de moulage par injection constitué d'une résine synthétique (9), la partie des fils (3) qui est moulée par injection étant incorporée dans un noyau non divisé sous forme de bloc (3) constitué d'un matériau magnétique doux, **caractérisé en ce que** le revêtement constitué de résine synthétique (9) est pourvu d'un canal (10) ou d'ouvertures (11) dans lesquelles une partie des fils (3) peut être reconnue.

5. Elément inductif selon la revendication (4), **caractérisé en ce que** le noyau (1) se compose d'une manière prédominante d'un matériau de ferrite magnétique doux.

6. Dispositif de moulage par injection pour fabriquer un élément inductif selon la revendication 4, **caractérisé en ce que** le dispositif de moulage par injection est pourvu de moyens pour fixer les fils (3) dans le moule.

7. Dispositif de moulage par injection selon la revendication 6, **caractérisé en ce que** les moyens comprennent au moins une paire de parties allongées qui sont appliquées dans le moule et entre lesquelles sont serrés les fils (3).

8. Dispositif de moulage par injection selon la revendication 6, **caractérisé en ce que** les moyens comprennent au moins deux paires de parties allongées qui sont pourvues de dents entre lesquelles sont serrés les fils, lesquelles dents sont réparties sur lesdites parties de telle façon que des fils avoisinants (3) ne soient pas serrés par la même paire de parties.
